# EUROPÄISCHE PATENTSCHRIFT

(11) **EP 2 229 764 B1**
(45) Veröffentlichungstag und Bekanntmachung des Hinweises auf die Patenterteilung: **13.07.2016**
(21) Anmeldenummer: 08853444.1
(22) Anmeldetag: 26.11.2008
(51) Int. Cl.: G06Q 20/34, G07F 7/08, G07F 7/10, H04L 29/12, H04L 29/08

(54) **EINSCHREIBEN VON DATEN IN EINEN PORTABLEN DATENTRÄGER**
WRITING DATA TO A PORTABLE DATA CARRIER
ÉCRITURE DE DONNÉES SUR UN SUPPORT DE DONNÉES PORTABLE

(30) Priorität: 27.11.2007 DE 102007057002
(43) Veröffentlichungstag der Anmeldung: 22.09.2010
(73) Patentinhaber: Giesecke & Devrient GmbH, 81677 München (DE)
(72) Erfinder: ENGELBRECHT, Erich, 81671 München (DE); HINZ, Walter, 85748 Garching (DE); PALSHERM, Thomas, 85609 Aschheim (DE); SPITZ, Stephan, 85757 Karlsfeld (DE)
(86) Internationale Anmeldenummer: PCT/EP2008/010038
(87) Internationale Veröffentlichungsnummer: WO 2009/068270

(56) Entgegenhaltungen:
- WO-A-2005/064889
- WO-A-2007/124939
- DE-A1-102004 006 308
- US-B1- 6 519 251
- LU ET AL: "Network smart card review and analysis" COMPUTER NETWORKS, ELSEVIER SCIENCE PUBLISHERS B.V., AMSTERDAM, NL, Bd. 51, Nr. 9, 29. April 2007 (2007-04-29), Seiten 2234-2248, XP022122105 ISSN: 1389-1286

## Beschreibung

Die vorliegende Erfindung betrifft ein Verfahren zum Einschreiben von Daten in einen portablen Datenträger sowie einen derartigen portablen Datenträger.

WO 2005/064889 A1 beschreibt eine Chipkarte mit DHCP-Server, welcher den Subeinheiten innerhalb der Karte entsprechende IP-Adressen zuweist.

Bei einer zunehmenden Zahl von Einsatzmöglichkeiten portabler Datenträger, wie z. B. Chipkarten, Smart Cards oder dergleichen, werden Daten in mehrere unter Umständen gleichartige portable Datenträger parallel oder koordiniert über eine mit einer entsprechenden Schnittstelleneinrichtung ausgestattete Schreib-/ Lesevorrichtung eingeschrieben. Zum Beispiel werden im Rahmen der Herstellung von portablen Datenträgern bei deren Komplettierung die softwaretechnischen Voraussetzungen für die Initialisierung der Datenträger geschaffen, bei der weitgehend identische datenträger- und personenunabhängige Betriebsdaten in eine Vielzahl von identischen Datenträgern eingeschrieben werden (nachfolgend umfasst der Begriff "Initialisierung" auch die vorbereitende Komplettierung). Bei der anschließenden Personalisierung werden dann personenindividuelle Betriebsdaten in die Datenträger eingeschrieben, z. B. individuelle Identifikationsmerkmale derjenigen Endnutzer, an die die betreffenden Datenträger ausgegeben werden sollen.

Derartige Betriebsdaten, die auch ein Betriebssystem oder zumindest Teile eines Betriebssystems eines Datenträgers umfassen können, können mehrere MBytes umfassen. Derzeitig werden z. B. Smart Cards und Chipkarten über das gängige T=1- oder T=0-Kommunikationsprotokoll gemäß ISO 7816 mit Hilfe von ADPU-Kommunikationseinheiten ("Application Data Protocol U-nits") initialisiert und/ oder personalisiert. Jedoch ist die Übertragungsgeschwindigkeit des T=0/T=1-Kommunikationsprotokolls derart gering, dass eine effiziente parallele Initialisierung/Personalisierung einer Vielzahl von Datenträgern nicht möglich ist. Darüber hinaus unterstützt das T=0/T=1-Kommunikationsprotokoll eine quasi-parallele Initialisierung/Personalisierung von Datenträgern nicht, weil es lediglich für eine zweiseitige Datenkommunikation zwischen einem portablen Datenträger und einem Schreib-/ Lesegerät ausgelegt ist.

Ähnliche Probleme im Zusammenhang mit mehreren gleichzeitig an einer Schnittstelle einer Schreib-/ Lesevorrichtung angeschlossenen gleichartigen portablen Datenträgern treten bei zahlreichen weiteren komplexen Kommunikationsszenarien auf, z.B. bei einer Gegenzeichnung eines elektronischen Dokuments an einem Personalcomputer mit zwei angeschlossenen Identifikations-Chipkarten oder bei gleichzeitig an ein Computersystem angeschlossenen Arzt- und Patienten-Chipkarten oder dergleichen.

Demzufolge ist die Aufgabe der vorliegenden Erfindung, ein effizientes und koordiniertes Einschreiben von Daten in mehrere an einer Schreibvorrichtung angeschlossene portable Datenträger zu ermöglichen.

Diese Aufgabe wird durch ein Verfahren zum Einschreiben von Daten in einen portablen Datenträger sowie einen portablen Datenträger mit den Merkmalen der unabhängigen Ansprüche gelöst. Vorteilhafte Ausgestaltungen und Weiterbildungen sind in den abhängigen Ansprüchen angegeben.

Bei einem erfindungsgemäßen Verfahren zum Einschreiben von Daten in einen mit einer Schreibvorrichtung verbundenen portablen Datenträger erzeugt der portable Datenträger zumindest einen Teil einer individuellen Adressierung, über die die Schreibvorrichtung den Datenträger beim Einschreiben der Daten eindeutig adressieren und ansprechen kann. Ein entsprechender portabler Datenträger umfasst insofern zumindest einen Speicher, eine Schnittstelleneinrichtung und einen Adressgenerator, der zumindest einen Teil einer solchen individuellen Adressierung erzeugen kann, mit der eine Schreibvorrichtung, mit der der Datenträger über die Schnittstelleneinrichtung verbunden ist, den Datenträger zum Einschreiben von Daten in dessen Speicher eindeutig adressieren und ansprechen kann.

Die individuelle Adressierung ist dabei vorzugsweise eine mehrteilige Adressierung, die mehrere separate Adressen für verschiedene Protokollschichten eines mehrschichtigen Kommunikationsprotokolls umfasst. Dabei ist jeweils eine dieser mehreren separaten Adressen, die die individuelle Adressierung insgesamt umfasst, zur eindeutigen Adressierung des Datenträgers über eine bestimmt Protokollschicht des mehrschichtigen Kommunikationsprotokolls geeignet. Erfindungsgemäß wird zumindest ein Teil dieser mehrteiligen Adressierung von dem Datenträger selbst erzeugt, vorzugsweise zumindest eine der mehreren Adressen zur Adressierung des Datenträgers über die entsprechende Protokollschicht des verwendeten mehrschichtigen Kommunikationsprotokolls.

Der Prozess des Erzeugens einer eindeutigen, individuellen Adressierung ist derart ausgestaltet, dass mehrere gleichzeitig mit der Schreibvorrichtung verbundene erfindungsgemäße Datenträger von der Schreibvorrichtung eindeutig adressiert werden können, weil die erzeugten Adressierungen paarweise verschieden zueinander sind und sich deshalb keine Adressierungskonflikte ergeben können. Die Schreibvorrichtung kann also Daten in jeden einzelnen dieser mehreren Datenträger über dessen individuelle Adressierung einschreiben. Durch die Möglichkeit der eindeutigen individuellen Adressierung jedes portablen Datenträgers durch die Schreibvorrichtung ist es insbesondere möglich, gleichartige oder sogar weitgehend identische Daten durch nebenläufige Prozesse (quasi-) gleichzeitig in mehrere portable Datenträger einzuschreiben, da die Datenträger individuell adressierbar und von der Schreibvorrichtung jederzeit unterscheidbar sind.

Unter einem quasi-gleichzeitigen Einschreiben von Daten ist in diesem Zusammenhang insbesondere ein Multitasking-Verfahren zu verstehen, das eine nebenläufige Ausführung einzelner paralleler Einschreibprozesse ermöglicht, indem die Prozesse in so kurzen Abständen alternierend aktiviert werden, dass der Eindruck der Gleichzeitigkeit entsteht. Darüber hinaus kann unter einem quasi-gleichzeitigen Einschreiben auch ein echtes paralleles Einschreiben von Daten verstanden werden, sofern die Schreibvorrichtung über die entsprechenden computerarchitektonischen Voraussetzungen verfügt.

Auf diese Weise kann durch ein paralleles Einschreiben von identischen oder gleichartigen Betriebsdaten (z.B. Initialisierungs- oder Personalisierungsdaten) in eine Vielzahl von weitgehend identischen oder zumindest gleichartigen portablen Datenträgern der Durchsatz bei der Initialisierung/Personalisierung im Rahmen einer Herstellung von portablen Datenträgern erhöht werden, was eine effiziente Datenträgerherstellung ermöglicht. Des Weiteren wird der Raumbedarf bei der Initialisierung/Personalisierung reduziert, da bei der gleichzeitigen Initialisierung/Personalisierung einer Vielzahl von Datenträgern nur für wenige bzw. nur für eine einzige Schreibvorrichtung Platz benötigt wird. Die Erfindung leistet also einen wesentlichen Beitrag zur effizienten Herstellung von portablen Datenträgern durch eine Parallelisierung derjenigen datenverarbeitungstechnischen Prozesse, mit denen ein Datenträger auf seinen späteren Einsatz durch den betreffenden Endnutzer vorbereitet wird.

Zur Verbindung eines portablen Datenträgers mit der Schreibvorrichtung umfassen der Datenträger und die Schreibvorrichtung jeweils korrespondierende Schnittstelleneinrichtungen, über die auch mehrere Datenträger gleichzeitig an die Schreibvorrichtung angeschlossen werden können. Darüber hinaus umfasst jeder Datenträger eine Steuereinrichtung, die die Kommunikation mit der Schreibvorrichtung und das Erzeugen eines von dem Datenträger zu erzeugenden zumindest einen Teils der individuellen Adressierung durch den Adressgenerator steuert. Jeder Adressgenerator eines mit der Schreibvorrichtung verbundenen Datenträgers erzeugt dementsprechend auf Veranlassung der entsprechenden Steuereinrichtung zumindest einen Teil einer individuellen Adressierung des betreffenden Datenträgers, wobei die für einen Datenträger erzeugte individuelle Adressierung paarweise verschieden zu allen anderen Adressierungen ist, die für andere mit der Schreibvorrichtung verbundene Datenträger erzeugt werden. Die individuellen Adressierungen bzw. diejenigen Teile der individuellen Adressierungen, die von den Datenträgern zu erzeugen sind, können z.B. basierend auf Zufallsinformationen oder individuellen Datenträgerkennungen erzeugt werden, die ihrerseits bereits paarweise verschieden sind. Eine Steuereinrichtung eines Datenträgers veranlasst den Adressgenerator, den zumindest einen Teil der individuellen Adressierung zu erzeugen, z.B. wenn sie das Anschließen des Datenträgers an die Schreibvorrichtung registriert oder ein die Adresserzeugung betreffendes Adressanforderungssignal von der Schreibvorrichtung empfängt.

Darüber hinaus ist es vorteilhaft, dass nicht nur paarweise verschiedene individuelle Adressierungen bezüglich solcher Datenträger erzeugt werden, die jeweils gleichzeitig mit der Schreibvorrichtung verbunden sind, sondern auch für möglichst viele bzw. sogar alle portablen Datenträger, die von der betreffenden Schreibvorrichtung zeitlich versetzt mit Daten beschrieben werden. Im Rahmen der Datenträgerherstellung können so individuelle Adressierungen erzeugt werden, die bezüglich allen von einer bestimmten Schreibvorrichtung jemals individualisierten oder personalisierten Datenträgern einzigartig sind und demzufolge auch nach dem Schreibvorgang dauerhaft datenträgerindividuell bleiben.

Die Daten werden von der Schreibvorrichtung vorzugsweise gemäß dem mehrschichtigen TCP/IP-Kommunikationsprotokoll in einen portablen Datenträger eingeschrieben. Aus diesem Grund baut die Schreibvorrichtung TCP/ IP-Verbindungen zu allen über die Schnittstelleneinrichtung angeschlossenen portablen Datenträgern auf. Dementsprechend umfassen die für die Datenträger, die durch ein aus TCP/IP-Verbindungen bestehendes Netzwerk mit der Schreibvorrichtung verbunden sind, zu erzeugenden individuellen Adressierungen zumindest jeweils eine datenträgerindividuelle IP-Adresse, die sich zumindest von den individuellen IP-Adressen aller anderen zu diesem Zeitpunkt an der Schreibvorrichtung angeschlossenen Datenträger unterscheidet.

Die IP-Adresse kann sowohl von dem Datenträger bzw. dem Adressgenerator des Datenträgers selbst erzeugt werden als auch von der Schreibvorrichtung bzw. einem Adressgenerator der Schreibvorrichtung, mit der der Datenträger verbunden ist. Insofern gelten alle nachfolgend im Zusammenhang mit der Erzeugung einer IP-Adresse durch einen Adressgenerator eines Datenträgers genannten Funktionen und Eigenschaften sinngemäß auch für einen entsprechenden Adressgenerator der Schreibvorrichtung, der IP-Adressen für die mit ihm verbundenen Datenträger erzeugt.

Vorzugsweise wird als Schnittstelleneinrichtung des Datenträgers (und entsprechend der Schreibvorrichtung) eine Hochgeschwindigkeitsschnittstelle verwendet, insbesondere eine USB-Schnittstelle, die als Sicherungsschicht (Protokollschicht 2 des ISO/OSI Referenzmodells) einen Netzwerkzugang für die TCP/IP-Verbindung als Vermittlungs- bzw. Transportschicht (Protokollschichten 3 und 4 des ISO/OSI Referenzmodells) ermöglicht.

Das Einschreiben von Daten in den Speicher des portablen Datenträgers mittels einer TCP/IP-Verbindung wird von einer Steuereinrichtung des Datenträgers unterstützt und kann über eine derartige USB-Hochgeschwindigkeitsschnittstelle mit einer hohen Datenrate erfolgen (bis zu 12 MBit/s). An einer korrespondierenden USB-Schnittstelleneinrichtung der Schreibvorrichtung kann eine Vielzahl von Datenträgern angeschlossen werden, so dass aufgrund der Kombination einer parallelen Konnektivität mit der hohen Datenrate der USB-Schnittstelle Daten in eine Vielzahl von Datenträgern quasi-gleichzeitig eingeschrieben werden können.

Bei USB-Schnittsteileneinrichtungen gibt es insbesondere auch die Möglichkeit, dass ein Datenträger über eine Netzwerkverbindung als eigenständiges Netzwerkgerät (und nicht nur als passives lokales USB-Gerät) mit der Steuereinrichtung verbunden ist, so dass Daten - z.B. Betriebsdaten zur Initialisierung/Personalisierung - über eine geeignete Netzwerkoperation in den betreffenden Datenträger eingeschrieben werden können. Eine derartige Netzwerkverbindung zwischen der Schreibvorrichtung und einer Vielzahl von Datenträgern wird z.B. von dem USB-Standard im Rahmen des Ethernet-Emulationsmoduls ("Ethernet Emulation Module") als eigene Geräteklasse ("Device Class") unterstützt (EEM/CDC) und muss dementsprechend auch von den Steuereinrichtungen der Datenträger unterstützt werden. Über die zwischen der Schreibvorrichtung und den Datenträgern bestehenden USB-Verbindungen werden also Ethernet-Verbindungen auf der Sicherungsschicht (Protokollschicht 2 des ISO/OSI Referenzmodells) ins Internet oder ein anderes geeignetes Datenkommunikationsnetz emuliert, über die die Daten in die betreffenden Datenträger eingeschrieben werden können. In diesem Fall erzeugt der Adressgenerator eines Datenträgers veranlasst durch seine Steuereinrichtung zusätzlich zu der (möglicherweise von der Schreibvorrichtung erzeugten) IP-Adresse eine individuelle MAC-Adresse ("Media Access Control") für den betreffenden Datenträger, da die Schreibvorrichtung Ethernet-Pakete und IP-Pakete gemäß verschiedener Protokollschichten an die MAC-Adresse und die IP-Adresse des Datenträgers sendet. Die MAC-Adresse repräsentiert insofern einen zumindest einen Teil der individuellen Adressierung, der von dem Datenträger bzw. von dessen Adressgenerator erzeugt wird, während die IP-Adresse auch von der Schreibvorrichtung erzeugt werden kann.

Vorzugsweise werden die individuellen IP-Adressen bzw. individuellen MAC-Adressen von einem Adressgenerator jeweils aus einem IP-Adressraum bzw. MAC-Adressraum ausgewählt, den die Steuereinrichtung des Datenträgers oder die Schreibvorrichtung vorgibt. Während ein MAC-Adressraum ein dem Datenträgerhersteller zugeordneter Bereich von MAC-Adressen ist, aus dem er neu hergestellten Geräten eine MAC-Adresse zuordnen kann, ergibt sich der IP-Adressraum aus dem genutzten Subnetzwerk (z.B. gemäß der IPv4- oder der IPv6-Adressierung).

Eine Kommunikation zwischen der Schreibvorrichtung und den Datenträgern vor der Erzeugung der individuellen Adressierungen (d.h. bevor eine TCP/IP-Datenkommunikation mit logischer Adressierung der Datenträger möglich ist) kann auf der Ebene des USB-Protokolls über die USB-Verbindungen erfolgen. Da die USB-Schnittstelleneinrichtungen (d.h. USB-Anschlüsse bzw. USB-Ports) der Datenträger für eine USB-Steuerung der Schreibvorrichtung (z.B. einen USB Controller) unterscheidbar sind, können die Datenträger über ihre jeweiligen USB-Anschlüsse einzeln angesprochen werden. Auf diese Weise kann die Schreibvorrichtung den Datenträgern gegebenenfalls Informationen über die zur Verfügung stehenden Adressräume bereitstellen oder auch die erzeugten individuellen Adressierungen der Datenträger empfangen und über die unterscheidbaren USB-Anschlüsse den einzelnen Datenträgern zuordnen.

Es ist vorteilhaft, dass Adressgeneratoren IP-Adressen und MAC-Adressen aus den betreffenden Adressräumen, die zumindest für alle mit der gleichen Schreibvorrichtung verbundene Datenträger identisch sind, möglichst statistisch gleichverteilt auswählen, so dass sich die den verschiedenen Datenträgern zugeordneten IP-Adressen und MAC-Adressen möglichst gar nicht bzw. lediglich sehr selten wiederholen. Dies kann beispielsweise dadurch erreicht werden, dass ein Adressgenerator die individuelle MAC-Adresse und/oder IP-Adresse basierend auf einer eindeutigen bzw. möglichst zufälligen oder quasi-zufälligen Kennung des Datenträgers erzeugt, wie z.B. einer eindeutigen Seriennummer oder Identifikationsnummer des Datenträgers, z.B. der ICCSN ("Integrated Circuit Card Serial Number") des Datenträgers. Ebenso ist es möglich, IP- und/oder MAC-Adressen basierend auf einem Zufallsprozess zu erzeugen, der z.B. von einem Zufallsgenerator ausgeführt wird. Dieses möglichst optimale Ausnutzen eines zur Verfügung stehenden Adressraums führt dann insbesondere dazu, dass die jeweiligen Adressgeneratoren nicht nur IP- bzw. MAC-Adressen erzeugen, die bezüglich den zu dem betreffenden Zeitpunkt parallel mit der Schreibvorrichtung verbundenen Datenträgern individuell sind, sondern sogar solche IP- bzw. MAC-Adressen erzeugt werden, die sogar für (möglichst) alle von einer Schreibvorrichtung (jemals) beschriebenen Datenträger individuell sind. Demzufolge ist es vorteilhaft, dass ein Adressgenerator selbst bei einem Neustart des Datenträgers (bzw. der Schreibvorrichtung) vorher noch nicht verwendete MAC-Adressen bzw. IP-Adressen erzeugt, obwohl sich die Seriennummer des betreffen den Datenträgers nicht geändert hat. Dies kann beispielsweise durch zusätzliche Verwendung einer Zufallszahl in der Adressierung erreicht werden.

Alternativ ist es möglich, einen Datenträger als Massenspeicher (d.h. als lokales Peripheriegerät und nicht als eigenständiges, aktives Gerät in einem Kommunikationsnetzwerk) an die Schreibvorrichtung anzuschließen, so dass beispielsweise ein Datensystem des Datenträgers in ein Dateisystem der Schreibvorrichtung eingebunden wird. In diesem Fall erzeugt der Adressgenerator des Datenträgers veranlasst durch die Steuereinrichtung als zumindest einen Teil der individuellen Adressierung eine bezüglich der Schreibvorrichtung eindeutige datenträgerindividuelle Laufwerksbezeichnung, die dem betreffenden Datenträger von der Schreibvorrichtung eindeutig zugeordnet werden kann.

Neben diesem lokalen Anschließen eines Datenträgers an die Schreibvorrichtung kann ein Datenträger auch über eine TCP/IP-Netzwerkverbindung als Massenspeicher (d.h. als Netzwerk-Peripheriegerät) von der Schreibvorrichtung angesprochen werden. In diesem Fall veranlasst entweder die Steuereinrichtung des betreffenden Datenträgers den Adressgenerator, neben der eindeutigen Laufwerksbezeichnung auch eine eindeutige IP-Adresse für den Datenträger zu erzeugen, oder die Schreibvorrichtung erzeugt geeignete IP-Adressen für alle auf diese Weise mit der Schreibvorrichtung verbundene Datenträger. Ein als Netzwerk-Massenspeicher angeschlossener Datenträger wird demzufolge zumindest über eine eindeutige Laufwerksbezeichung und unter Umständen über eine zusätzlich IP-Adresse adressiert, damit die Schreibvorrichtung mittels geeigneter Dateisystem- bzw. Netzwerkoperationen Daten in die betreffenden Datenträger einschreiben kann.

Vorzugsweise erzeugt der Adressgenerator eines Datenträgers die eindeutige Laufwerksbezeichnung anhand der ICCSN des Datenträgers, die eine eindeutige und gegebenenfalls unverschlüsselt in einem geeigneten Speicher des Datenträgers hinterlegte Seriennummer repräsentiert. Die ICCSN kann vollständig oder teilweise (z.B. nur die letzten vier Byte) als solches oder kombiniert mit anderen Angaben die eindeutige Laufwerksbezeichung des Datenträgers bilden. Die von dem Adressgenerator des Datenträgers auf diese Weise erzeugte eindeutige Laufwerksbezeichung kann, gegebenenfalls zusammen mit weiteren kommunikationsrelevanten Angaben, von der Steuereinrichtung in dem Bootblock des Datenträgers hinterlegt werden, auf den die Schreibvorrichtung beim Einbinden des Datenträgers physikalisch zugreifen kann, vorzugsweise über die USB-Verbindung zwischen der Schreibvorrichtung und dem Datenträger auf der Ebene des USB-Protokolls. Nach dem Auslesen der Laufwerksbezeichung des Datenträgers und gegebenenfalls weiterer Laufwerksbezeichnungen anderer mit der Schreibvorrichtung verbundener Datenträger kann die Schreibvorrichtung den/ die Datenträger logisch eindeutig adressieren und Daten einschreiben.

Vorzugsweise authentisiert sich die Schreibvorrichtung gegenüber dem jeweiligen Datenträger bzw. seiner Steuereinrichtung, bevor die Daten in den Speicher des Datenträgers eingeschrieben werden. Auf diese Weise gestattet die Steuereinrichtung eines Datenträgers ein Einschreiben von z.B. sicherheitsrelevanten Betriebsdaten im Rahmen einer Initialisierung/Personalisierung des Datenträgers nur dann, wenn es sich um eine vertrauenswürdige bzw. autorisierte Schreibvorrichtung handelt.

Bei den in die Datenträger einzuschreibenden Daten handelt es sich insbesondere um im Rahmen einer Herstellung von Chipkarten, Smart Cards oder ähnlichen chipkartenförmigen portablen Datenträgern anfallende Betriebsdaten, also insbesondere Initialisierungsdaten und/oder Personalisierungsdaten. Solche Betriebsdaten können der Schreibvorrichtung von einem Hintergrundserver bereitgestellt werden, der von einem Datenträgerhersteller und/oder -herausgeber mit Initialisierungsdaten und/oder Personalisierungsdaten versorgt wird.

Obwohl das erfindungsgemäße Verfahren prinzipiell dazu geeignet ist, beliebige Daten in beliebige portable Datenträger einzuschreiben bzw. beliebige portable Datenträger zu initialisieren und/oder zu personalisieren oder auch sonstige Betriebsdaten bei der Herstellung von portablen Datenträgern in diese einzuschreiben, ist das erfindungsgemäße Verfahren besonders dazu geeignet, mit einer USB-Schnittstelle ausgestattete Chipkarten (USB-Chipkarten) gemäß dem beschriebenen Verfahren zu initialisieren und/oder zu personalisieren. Darüber hinaus ist die Erfindung aber auch bei anderen komplexen Kommunikationssystemen einsetzbar, die eine gleichzeitige oder koordinierte Kommunikation einer Schreib-/Lesevorrichtung mit mehreren angeschlossenen portablen Datenträgern erfordert, die gleichartig und gleichberechtigt oder funktional und verfahrenstechnisch unterschiedlich ausgestaltet sein können.

Weitere Vorteile der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Figur 1: eine schematische Übersicht eines Initialisierungs-/Personalisierungssystems, bestehend aus einem Hintergrundserver, Schreibvorrichtungen sowie mehreren zu initialisierenden/personalisierenden Chipkarten;
- Figur 2: eine Chipkarte, die mit einer Schreibvorrichtung in Verbindung steht;
- Figur 3a: ein Flussdiagramm zum Einschreiben von Betriebsdaten in eine Chipkarte als Netzwerkgerät; und
- Figur 3b: ein Flussdiagramm zum Einschreiben von Betriebsdaten in eine Chipkarte als Massenspeicher.

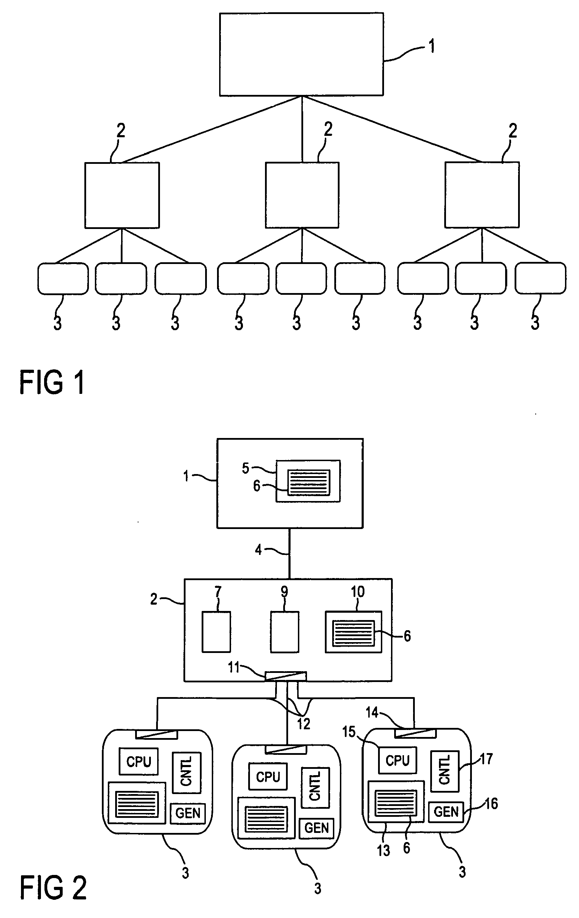

Fig.1 zeigt ein Initialisierungs-/Personalisierungssystem, das aus einem Hintergrundserver 1 und mehreren mit dem Hintergrundserver 1 verbundenen Initialisierungs-/Personalisierungseinheiten 2 besteht, an die jeweils mehrere Chipkarten 3 angeschlossen sind. Die Chipkarten 3 werden durch das Initialisierungs-/Personalisierungssystem (nachfolgend als "Schreibsystem" bezeichnet) bzw. durch die Initialisierungs-/Personalisierungseinheiten 2 (nachfolgend als "Schreibvorrichtungen" bezeichnet) initialisiert und/oder personalisiert.

Das Schreibsystem gemäß Fig.1 und 2 umfasst eine oder mehrere Schreibvorrichtungen 2, die insbesondere als eingebettete Systeme ("Embedded Systems") ausgestaltet sein können, an deren jeweiliger Schnittstelleneinrichtung 11 jeweils mehrere mit Betriebsdaten 6 in Form von Initialisierungs- und/oder Personalisierungsdaten zu bestückende Chipkarten 3 angeschlossen werden können. Auf diese Weise können die zu initialisierenden bzw. zu personalisierenden Chipkarten 3, möglicherweise gesteuert durch den Hintergrundserver 1, nach fertigungstechnischen oder datenverarbeitungstechnischen Vorgaben auf die einzelnen Schreibvorrichtungen 2 verteilt werden. Dementsprechend ist das Schreibsystem vorzugsweise in die sonstigen Herstellungsschritte einer Anlage zur Herstellung von Chipkarten 3 integriert.

Hierbei sind unter "Initialisierungsdaten" datenträgerunabhängige Daten zu verstehen, die zur Initialisierung der Chipkarten verwendet werden, d. h. insbesondere das Betriebssystem oder zumindest Teile des Betriebssystems sowie datenträgerunabhängige Applikationen, Verwaltungsdaten oder dergleichen, wie z. B. Komplettierungsdaten, die im Kontext der vorliegenden Erfindung ebenfalls unter den Begriff "Initialisierungsdaten" fallen. Demgemäß sind "Personalisierungsdaten" personenindividuelle Daten, die eine Zuordnung zwischen einer Chipkarte 3 und demjenigen Endnutzer herstellen, für den die Chipkarte 3 bestimmt ist. Personalisierungsdaten können z. B. identifizierende Angaben, wie z.B. Name, Adresse und dergleichen sein. Das in Fig.1 skizzierte Schreibsystem kann insofern sowohl von einem Chipkartenhersteller integriert in den Chipkartenherstellungsprozess betrieben werden, als auch von einem Chipkartenherausgeber (z.B. einem Kreditinstitut oder dergleichen), der bereits initialisierte und fertig gestellte Chipkarten 3 personalisiert und an die Endkunden weitergibt.

Fig. 2 zeigt, dass der Chipkartenhersteller und/oder -herausgeber die Betriebsdaten 6 in einem Speicher 5 des Hintergrundservers 1 ablegt. Der Hintergrundserver 1 leitet die Betriebsdaten 6 über eine Datenkommunikationsverbindung 4 nach vorgegebenen Kriterien an die jeweiligen Schreibvorrichtungen 2 weiter, welche die Betriebsdaten 6 schließlich über weitere Datenkommunikationsverbindungen 12 in dafür vorgesehene Speicher 13 der angeschlossenen Chipkarten 3 einschreiben. Die Datenkommunikationsverbindung 4 zwischen dem Hintergrundserver 1 und den Schreibvorrichtungen 2 kann über ein beliebiges Datenkommunikationsnetzwerk bereitgestellt werden, z.B. als TCP/IP/Ethernet-Verbindung über das Internet. Die Datenkommunikationsverbindung 4 ist vorzugsweise gegen Manipulation und Ausspähen kryptographisch oder anderweitig gesichert. Neben einer entsprechenden Schnittstelle für die Datenkommunikationsverbindung 4 verfügt jede Schreibvorrichtung 2 über eine USB-Schnittstelleneinrichtung 11, über die eine Vielzahl von Chipkarten 3 an die Schreibvorrichtung 2 angeschlossen werden kann, so dass die Betriebsdaten 6 von einer Schreibvorrichtung 2 über eine USB-Verbindung 12 zu korrespondierenden USB-Schnittstellen 14 der Chipkarten 3 in die Speicher 13 der betreffenden Chipkarte 3 eingeschrieben werden.

Vorzugsweise sind die Chipkarten 3 gleichartig (im Falle der Initialisierung sind sie sogar weitgehend identisch) und werden gleichzeitig oder zumindest quasi-gleichzeitig von einer Schreibvorrichtung 2 initialisiert/personalisiert. Damit eine derartige (quasi-) gleichzeitige Individualisierung/Personalisierung der jeweils über USB-Verbindungen 12 angeschlossenen Chipkarten 3 möglich ist, müssen die Chipkarten 3 jedoch für die Schreibvorrichtung 2 unterscheidbar und konfliktfrei individuell adressierbar sein.

Die Schreibvorrichtung 2 ist mit den üblichen Komponenten eines Computers ausgestattet, wie z. B. einem Prozessor 7, einer Schreibeinrichtung 9 sowie einem Speicher 10. Optional kann die Schreibvorrichtung noch einen Adressgenerator (nicht dargestellt) umfassen der z.B. IP-Adressen für alle mit der Schreibvorrichtung 2 verbundene Chipkarten 3 erzeugen kann, sofern dies nicht von den jeweiligen Chipkarten 3 selbst erledigt wird.

Die Schreibeinrichtung 9, die das Einschreiben der Betriebsdaten 6 selbständig oder auf Veranlassung des Hintergrundservers 1 durchführt, und andere Komponenten der Schreibvorrichtung, z.B. auch der optionale Adressgenerator, können als Programmmodule oder sonstige Software-Komponenten ausgestaltet sein, die von dem Prozessor 7 ausgeführt werden können. Über die USB-Schnittstelleneinrichtung 11 kann eine Vielzahl von zu initialisierenden/ personalisierenden Chipkarten 3 parallel an die Schreibvorrichtung 2 angeschlossen werden.

Eine Chipkarte 3 umfasst eine USB-Schnittstelleneinrichtung 14 zur Verbindung mit der korrespondierenden USB-Schnittstelleneinrichtung 11 der Schreibvorrichtung 2, einen Prozessor 15, einen nichtflüchtigen Speicher 13 zur Aufnahme der Betriebsdaten 6, z.B. in einen EEPROM-Speicher, Flash-Speicher, FeRAM-Speicher oder MARAM-Speicher, sowie weitere übliche Komponenten, wie z.B. einen RAM-Arbeitsspeicher und einen ROM-Speicher (nicht dargestellt). Ferner umfassen die Chipkarten 3 einen von einer Steuereinrichtung 17 der Chipkarte 3 aktivierbaren Adressgenerator 16, der die individuelle Adressierung für die jeweilige Chipkarte 3 erzeugt, mit der diese von der Schreibvorrichtung 2 beim Einschreiben der Betriebsdaten 6 eindeutig adressiert werden kann. Vorzugsweise sind die Steuereinrichtung 17 und der Adressgenerator 16 als auf dem Prozessor ausführbare Softwarekomponenten der Chipkarte 3 ausgestaltet.

Die in den Speicher 13 der Chipkarten 3 einzuschreibenden Betriebsdaten 6 werden zunächst von dem Hintergrundserver 1 über die Datenkommunikationsverbindung 4 in dem Speicher 10 der Schreibvorrichtung 2 zwischengespeichert. Die Schreibeinrichtung 9 ließt die Betriebsdaten 6 aus dem Speicher 10 aus und schreibt sie in die Speicher 13 der Chipkarten 3 ein, indem jede einzelne der Chipkarten 3 über die vorher von dem entsprechenden Adressgenerator 16 erzeugte individuelle Adressierung eindeutig angesprochen und adressiert wird. Hierbei führt die Schreibeinrichtung 9 vorzugsweise ein von dem Hintergrundserver 1 veranlasstes Schreibkommando aus, dass das Einschreiben der Betriebsdaten in alle angeschlossenen Chipkarten 3 betrifft. Die individuellen Adressierungen sind zumindest bezüglich der zu einem bestimmten Zeitpunkt über die USB-Schnittstelle 11 an der Schreibvorrichtung 2 gleichzeitig angeschlossenen Chipkarten 3 paarweise unterschiedlich und insofern eindeutig, vorzugsweise sind sogar die Adressierungen aller über einen längeren Zeitraum von der Schreibvorrichtung 2 bearbeiteten Chipkarten 3 paarweise unterschiedlich, so dass Adressierungskonflikte grundsätzlich vermieden werden können.

Zur Erzeugung einer individuellen Adressierung kann der betreffende Adressgenerator 16 einen Zufallszahlengenerator umfassen oder nutzen, der als Basis für die Erzeugung der individuellen Adressierung mittels eines möglichst gleichverteilten stochastischen Prozesses eine Zufallszahl erzeugt. Die individuelle Adressierung der betreffenden Chipkarte 3 wird dann durch den Adressgenerator 16 mittels einer Abbildung der Zufallszahl in den jeweils für derartige Adressierungen zur Verfügung stehenden Adressraum gebildet, wobei verschiedene Zufallszahlen vorzugsweise nicht auf gleiche Adressierungen abgebildet werden. Auf diese Weise kann weitgehend ausgeschlossen werden, dass sich Adressierungen wiederholen und zu Adresskonflikten führen.

Der Adressraum ist vorzugsweise für jede Chipkarte 3 identisch und wird von der Schreibvorrichtung 2 bzw. dem Zentralserver 1 vorgegeben und über die USB-Verbindung 12 an die Steuereinrichtung 17 weitergegeben oder von dieser angefordert. Eine derartige Kommunikation zwischen der Schreibvorrichtung 2 und einer Chipkarte 3 erfolgt auf der Ebene des USB-Protokolls, indem die jeweiligen phsysikalischen USB-Anschlüsse 11,14 (und nicht die betreffenden logischen Geräte) durch entsprechende Signale angesprochen werden. Auf diese Weise wird auch die von einem Adressgenerator 16 erzeugte individuelle Adressierungen von der Steuereinrichtung 17 über die USB-Verbindung 12 an die Schreibvorrichtung 2 weitergeleitet bzw. von dieser angefordert oder abgefragt.

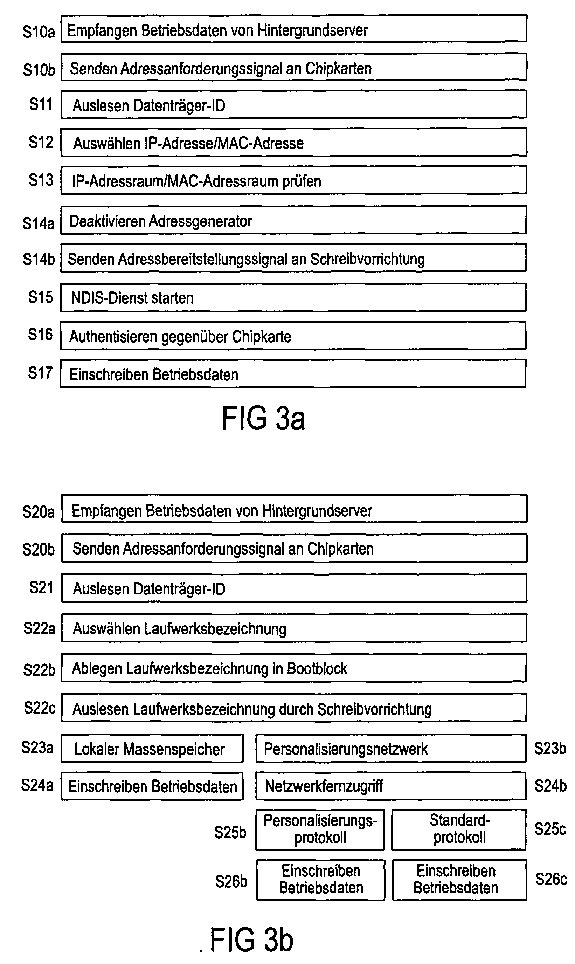

Bei einer USB-Verbindung 12 zwischen der Schreibvorrichtung 2 und den Chipkarten 3 gibt es prinzipiell zumindest zwei alternative Ausführungsvarianten, die in den Figuren 3a und 3b in Form von Flussdiagrammen illustriert sind. Figur 3a zeigt die Chipkarten 3 als Netzwerkgeräte, die über eine (emulierte) Ethernet-Netzwerkverbindung von der Schreibvorrichtung 2 angesprochen werden können. Hierbei wird zum Einschreiben der Betriebsdaten 6 durch die Schreibvorrichtung 2 in einen Speicher 13 einer Chipkarten 3 eine TCP/IP-Verbindung aufgebaut, um die Betriebsdaten 6 gemäß dem TCP/IP-Protokoll einzuschreiben. Demgegenüber illustriert Figur 3b die Möglichkeit, die Chipkarten 3 als Massenspeicher der Schreibvorrichtung 2 anzusprechen. In diesem Fall gibt es wiederum die beiden Untervarianten, eine Chipkarten 3 entweder als lokalen Massenspeicher oder als Netzwerk-Massenspeicher an die Schreibvorrichtung 2 anzubinden.

Bei der Ausführungsvariante der Fig. 3a werden in Schritt S10a Betriebsdaten 6 von dem Hintergrundserver 1 über die Datenkommunikationsverbindung 4 an die Schreibvorrichtung 2 geschickt und die Schreibvorrichtung 2 bereitet das Einschreiben der Betriebsdaten 6 in die Speicher 13 der angeschlossenen Chipkarten 2 durch die Schreibeinrichtung 9 vor. Zu diesem Zweck sendet die Schreibvorrichtung 2 in Schritt S10b über die USB-Verbindungen 12 ein Adressanforderungssignal an jede der angeschlossenen Chipkarten 3 bzw. deren Steuereinrichtungen 17 und initiiert dadurch das Erzeugen der jeweiligen individuellen Adressierungen durch die einzelnen Adressgeneratoren 16 der betreffenden Chipkarten 3. Da zu diesem Zeitpunkt über die USB-Verbindungen 12 noch keine TCP/IP-Kommunikation mit logischer Adressierung etabliert ist, erfolgt das Adressanforderungssignal auf der Ebene des USB-Protokolls über die USB-Verbindung 12, da ein USB-Controller (nicht dargestellt) der Schreibvorrichtung 2 die einzelnen USB-Anschlüsse 14 der Chipkarten 3 über physikalische Anschlussadressen ansprechen kann. Die gesamte vorbereitende Kommunikation zwischen der Schreibvorrichtung 2 und den einzelnen Chipkarten 3 vor der Erzeugung der individuellen Adressierungen, auch diejenige, die aus einer teilweisen Erzeugung der individuellen Adressierungen durch die Schreibvorrichtung 21 resultiert, wird auf diese Weise abgewickelt.

In Schritt S11 reagiert die Steuereinrichtung 17 einer Chipkarten 3 auf das eintreffende Adressanforderungssignal der Schreibvorrichtung 2 indem eine eindeutige und die betreffende Chipkarte 3 identifizierende Kennungen als Grundlage für die Erzeugung einer individuellen Adressierung durch den entsprechenden Adressgenerator 16 ausgelesen wird. Diese Kennungen erfüllen prinzipiell die gleichen Voraussetzungen, wie die im Zusammenhang mit der in Fig. 2 genannten Zufallszahlen eines Zufallsgenerators. Bei den individuellen Kennungen kann es sich um beliebige Chipkarten-Identifikationen handeln, vorzugsweise um eine aus einem "Serial Number Register" (0x000f0004 und 0x000f0008) einer Chipkarte 3 auslesbare Seriennummer. Eine derartige eindeutige Chipkarten-Identifikation kann beispielsweise die ICCSN ("Integrated Circuit Card Serial Number") der Chipkarte 3 sein. Gegebenenfalls wird diese Seriennummer auf der Ebene des USB-Protokolls auch an die Schreibvorrichtung 2 geschickt, sofern vorgesehen ist, dass die Schreibvorrichtung 2 einen Teil der individuellen Adressierungen aller angeschlossenen Chipkarten 3 erzeugt.

Für die Anbindung der Chipkarten 3 als Netzwerkgeräte über die USB-Verbindungen 12 bietet der USB-Standard mit dem "Ethernet Emulation Module" (EEM) als Geräteklasse ("Class Definition for Communication Devices"; CDC) die Möglichkeit, ein Ethernet-Netzwerk über die USB-Schnittstelleneinrichtungen 11,14 aufzubauen. Das EEM führ hierbei eine Einkapselung von Ethernet-Datenblöcken zum Transport über die USB-Verbindungen 12 durch. Hierzu werden die MAC-Adressen ("Media Access Control") der einzelnen Chipkarten 3 zur Adressierung über die emulierte Ethernet-Verbindung verwendet.

In den Schritten S12 und S13 wird von dem durch die Steuereinrichtung 17 aktivierten Adressgenerator 16 für die betreffende Chipkarte 3 eine individuelle IP-Adresse und eine individuelle MAC-Adresse aus der zuvor ausgelesenen Chipkarten-Identifikation errechnet. Während die Schreibvorrichtung 2 Ethernet-Pakete an die MAC-Adresse der Chipkarte 3 sendet, dient die IP-Adresse dazu, die Chipkarte 3 in dem betreffenden IP-Subnetz zum Empfangen von IP-Paketen eindeutig zu adressieren. Die IP-Adresse ist insofern nicht physikalisch sondern lediglich logisch an das betreffende Gerät gebunden. Alternativ können die IP-Adressen der Chipkarten 3 auch zentral von der Schreibvorrichtung 2 erzeugt werden, während die IP-Adresse der Schreibvorrichtung 2 selbst beispielsweise mittels eines DHCP-Servers ("Dynamic Host Configuration Protocol") konfiguriert wird. Sofern z.B. die IP-Adressen von der Schreibvorrichtung 2 erzeugt wird und die die MAC-Adresse von den Chipkarten 3, werden die beiden Adressen zum Bilden von individuellen Adressierungen, die über ein mehrschichtiges Kommunikationsprotokoll einsetzbar sind, durch eine entsprechende Kommunikation auf der Ebene des USB-Protokolls zusammengeführt.

Die MAC-Adresse und die IP-Adresse werden von dem Adressgenerator 16 derart ausgewählt, dass sie in einem zur Verfügung stehenden MAC-Adressraum bzw. IP-Adressraum liegen (Schritt S13). Eine entsprechende Information über den zur Verfügung stehenden MAC- bzw. IP-Adressraum wird von der Schreibvorrichtung 2 an die Steuereinrichtung 17 der Chipkarte 3 z.B. im Rahmen des Adressanforderungssignals (Schritt S10a) oder zu einem anderen Zeitpunkt separat auf der Ebene des USB-Protokolls gesendet.

Der MAC-Adressraum ist ein dem betreffenden Chipkartenhersteller zugewiesenes Kontingent an reservierten Adressen, z. B. 00 90 D3 xx xx xx. Die eindeutige IP-Adresse wird hingegen aus einem IP-Adressraum eines lokalen Subnetzes ausgewählt, das für die Initialisierung/Personalisierung der Chipkarten 3 verwendet wird. Hierbei wählt der Adressgenerator 16 in den Schritten S12 und S13 die MAC-Adresse bzw. die IP-Adresse vorzugsweise derart (statistisch gleichverteilt) aus, dass der volle MAC-Adressraum bzw. der volle IP-Adressraum ausgenutzt wird, bevor für eine Chipkarten-Identifikation eine bereits vorher vergebenen MAC-Adresse bzw. IP-Adresse erneut vergeben wird.

Anschließend kann der Adressgenerator 16 von der Steuereinrichtung 17 in Schritt S14a deaktiviert werden und die erzeugte Adressierung (bzw. nur die MAC-Adresse, sofern die IP-Adresse von der Schreibvorrichtung erzeugt wurde) wird in Schritt S14b von der Steuereinrichtung 17 der Chipkarte 2 in Form eines das Adressanforderungssignal (Schritt S10a) beantwortenden Adressbereitstellungssignals über die USB-Verbindung 12 an die Schreibvorrichtung 2 übermittelt. Die Schreibeinrichtung 9 der Schreibvorrichtung 2 kann dann das Einschreiben (Schritte S15 bis S17) der Betriebsdaten 6 in die Speicher 13 der Chipkarte 3 vornehmen, da die Chipkarten 3 nun über die erzeugten Adressierungen im Rahmen einer TCP/IP-Kommunikation eindeutig logisch adressierbar sind.

In Schritt S15 wird ein NDIS-Dienst ("Network Driver Interface Specification") auf der als "Embedded System" ausgestalteten Schreibvorrichtung 2 gestartet, der eine logische Schnittstelle zwischen der emulierten Ethernet-Verbindung mit MAC-Adressierung (Sicherungsschicht; ISO/OSI Referenzmodell, Schicht 2) und der darauf aufsetzenden TCP/IP-Datenkommunikation mit IP-Adressierung (Vermittlungsschicht; ISO/OSI Referenzmodell, Schicht 3) bildet.

In Schritt S16 authentisiert sich die Schreibvorrichtung 2 gegenüber einer Chipkarte 3, in die Betriebsdaten 6 eingeschrieben werden sollen. Dadurch stellt die Chipkarte 3 sicher, dass die Schreibvorrichtung 2 zum Einschreiben von Daten in die Chipkarte 3 berechtigt ist. Die Authentisierung kann beispielsweise eine kryptographische Authentisierung sein, eine PIN-Prüfung oder eine Zertifikatprüfung.

Abschließend werden in Schritt S17 die Betriebsdaten 6 von der Schreibeinrichtung 9 in die Speicher 13 der jeweils individuell adressierbaren Chipkarten 3 eingeschrieben, vorzugsweise durch eine geeignete Netzwerkoperation bzw. einen Netzwerkprozess. Derartige Prozesse können von dem Betriebssystem (nicht dargestellt) der Schreibvorrichtung 2 quasi-gleichzeitig durchgeführt werden, indem die einzelnen Schreibvorgänge von einem Multitasking-Betriebssystem nebenläufig ausgeführt werden.

Figur 3b illustriert einen Einschreibprozess, bei dem die einzelnen über USB-Verbindungen 12 angeschlossenen Chipkarten 3 als Massenspeicher der Schreibvorrichtung 2 eingebunden werden.

Die Schritte S20a, S20b und S21 der Ausführungsvariante gemäß Fig. 3b sind identisch mit den Schritten S10a, S10b und S11 der Ausführungsvariante gemäß Fig. 3a. In Schritt S22a erzeugt dann der Adressgenerator 16 als individuelle Adressierung eine individuelle Laufwerksbezeichnung der jeweils als Massenspeicher eingebundenen Chipkarte 3. Diese individuelle Laufwerksbezeichnung hängt unter Umständen von der Art des Betriebssystems der Schreibvorrichtung 2 und der konkreten Technologie ab, die dieses zum Einbinden der Chipkarten 3 als (lokale) Massenspeicher bereitstellt. Da die USB-Chipkarten 3 als separate Laufwerke bzw. Laufwerkspartitionen von der Schreibvorrichtung 2 eingebunden werden und dazu durch einen Laufwerksbuchstaben oder eine ähnliche individuelle Laufwerksbezeichnung separat adressiert werden müssen, erzeugt der Adressgenerator 16 die individuelle Laufwerksbezeichnung aus einer eindeutigen Kennung der Chipkarte 3, z.B. der anhand der in einem Register oder Speicher der Chipkarte 3 vorliegenden ICCSN ("Integrated Circuit Card Serial Number") der Chipkarte 3. Die ICCSN kann dann vollständig oder teilweise (z.B. nur die letzten vier Byte) in die individuelle Laufwerksbezeichnung eingehen. Ebenso kann auch ergänzend oder alternativ eine andere Chipkarten-Identifikation oder eine Zufallszahl in die individuelle Laufwerksbezeichnung eingehen. Die individuelle Laufwerksbezeichnung der Chipkarte 3 ist jedoch lediglich bezüglich allen zu einem Zeitpunkt mit der Schreibvorrichtung 2 als Massenspeicher verbundenen Chipkarten 3 eindeutig, da Laufwerksbezeichnungen mitunter aus sehr eingeschränkten Adressbereichen ausgewählt werden, z.B. aus der Menge der einzelnen Großbuchstaben. Die individuelle Laufwerksbezeichnung kann sich also im Laufe der Zeit durchaus für Chipkarten 3 wiederholen, die nicht gleichzeitig mit der Schreibvorrichtung 2 verbunden sind.

Die erzeugte individuelle Laufwerksbezeichnung wird in Schritt S22b von der Steuereinrichtung 17 in dem Bootblock der Chipkarte 3 abgelegt, wo die Schreibvorrichtung 2 sie in Schritt S22c über die USB-Verbindung 12 auslesen kann.

Bei der Ausführungsvariante der Fig. 3b ist es einerseits möglich, die USB-Chipkarten 3 direkt lokal über die USB-Verbindung 12 als lokale USB-Peripheriegerät der Schreibvorrichtung 2 einzubinden (Schritte S23a, S24a). Andererseits können die USB-Chipkarten 3 auch als Netzwerk-Massenspeicher eingebunden werden (Schritte S23b, S24b, S25b/c, S26b/c), auf die über ein auf der USB-Verbindung 12 aufsetzendes Netzwerkprotokoll zugegriffen werden kann.

Im erstgenannten Fall werden die USB-Chipkarten 3 lediglich über die ihnen zugeordneten Laufwerksbezeichnungen adressiert (Schritt S23a) und die Betriebsdaten 6 können direkt in den Speicher 13 der betreffenden Chipkarte 3 mittels einer Dateisystemoperation (z.B. ein Kopier- oder Schreibkommando) eingeschrieben werden (Schritt 24a).

Im letztgenannten Fall werden die USB-Chipkarten 3 als Massenspeicher in ein Personalisierungsnetzwerk eingebunden und als solche angesprochen (Schritt S23b). Eine solche als Netzwerk-Massenspeicher eingebundene USB-Chipkarte 3 wird in dem Personalisierungsnetzwerk über ein geeignetes Dateisystem mit einer Fernzugriffsmöglichkeit bereitgestellt. Die Personalisierung/Initialisierung der Chipkarten 3 durch die Schreibvorrichtung 2 erfolgt dann über einen geeigneten Netzwerkfernzugriff auf die betreffende Chipkarte 3 (Schritt S24b).

In diesem Fall ist eine eindeutige Laufwerksbezeichnung als Adressierung der Chipkarten 3 jedoch nicht ausreichend, sondern es ist zusätzlich eine eindeutige Netzwerkadresse erforderlich, z.B. eine individuelle IP-Adresse, sofern das Personalisierungsnetzwerk auf dem TCP/IP-Kommunikationsprotokoll basiert.

Für das eigentliche Einschreiben der Betriebsdaten 6 über einen Netzwerkfernzugriff auf eine USB-Chipkarte 3 existieren wiederum zwei Varianten.

Einerseits kann in Schritt S25b eine Initialisierung/Personalisierung mittels eines auf der Schreibvorrichtung 2 installierten, netzwerkfähigen, individuellen Client-Programms durchgeführt werden, das gemäß einem eigenen Personalisierungsprotokoll über die Netzwerkschnittstelle 12 auf die Chipkarte 3 zugreift. In diesem Fall wird die Chipkarte 3 über eine individuelle IP-Adresse des Client-Programms und die individuelle Laufwerksbezeichnung adressiert (z.B. in der der Form <IP-Adresse>/<Laufwerksbezeichnung>) und beschrieben (Schritt S26b).

Alternativ dazu kann die Irütialisierung/Personalisierung auch über ein standardisiertes Netzwerkprotokoll (Schritt S25c) zum Fernzugriff auf beliebige Netzwerklaufwerke erfolgen (Schritt S26c), wie z. B. das NFS-Protokoll ("Net-work File System").

Selbstverständlich sind die genannten Schrittabfolgen in den Figuren 3a und 3b nicht die einzigen Realisierungsmöglichkeiten des erfindungsgemäßen Verfahrens. Vielmehr sind auch andere Schrittabfolgen denkbar und eventuell notwendig. Zum Beispiel kann die Deaktivierung eines Adressgenerators in Fig. 3a (Schritt S14a) auch unmittelbar vor oder nach dem Einschreiben der Betriebsdaten 6 (Schritt S17) erfolgen. Ebenso kann eine Authentisierung gemäß Schritt S16 auch an einer geeigneten Stelle in einem Verfahren gemäß Fig. 3b erfolgen.

In jedem Fall sind die Verfahren gemäß Fig. 3a und Fig. 3b nicht auf USB-Chipkarten beschränkt, sondern können auf beliebige portable Datenträger und beliebige Datenkommunikationsverbindungen zwischen einer Schreibvorrichtung 2 und portablen Datenträgern 3 übertragen werden.

## Patentansprüche

1. Verfahren zum Einschreiben (S17; S24a; S26b; S26c) von Daten (6) in einen mit einer Schreibvorrichtung (2) verbundenen portablen Datenträger (3), wobei der Datenträger (3) zumindest einen Teil einer individuellen Adressierung erzeugt (S12, S13; S22a), über die der Datenträger (3) von der Schreibvorrichtung (2) beim Einschreiben (S17; S24a; S26b; S26c) der Daten (6) eindeutig adressierbar ist und die paarweise verschieden zu anderen individuellen Adressierungen ist, die jeweils für andere mit der Schreibvorrichtung (2) verbundene Datenträger (3) erzeugt werden, und die individuelle Adresse basierend auf einer individuellen Kennung des Datenträgers (3) erzeugt wird (S12, S13).

2. Verfahren nach Anspruch 1, **dadurch gekennzeichnet, dass** jeder einer Vielzahl von mit der Schreibvorrichtung (2) verbundenen Datenträgern (3) jeweils zumindest einen Teil der individuellen Adressierung erzeugt (S12, S13; S22a) und die Schreibvorrichtung (2) die Daten (6) durch Adressieren jedes der Vielzahl von Datenträgern (3) über dessen jeweilige individuelle Adressierung in die Vielzahl von Datenträgern (3) einschreibt (S17; S24a; S26b; S26c).

3. Verfahren nach Anspruch 2, **dadurch gekennzeichnet, dass** die Schreibvorrichtung (2) die Daten (6) in die Vielzahl von Datenträgern (3) quasi-gleichzeitig einschreibt (S17; S24a; S26b; S26c).

4. Verfahren nach einem der Ansprüche 1 bis 3, **dadurch gekennzeichnet, dass** zum eindeutigen Adressieren des Datenträgers (3) gemäß einem mehrschichtigen Kommunikationsprotokoll eine individuelle Adressierung erzeugt wird, die zumindest zwei separate Adressen umfasst, wobei jede der zumindest zwei separaten Adressen zum eindeutigen Adressieren des Datenträgers über jeweils eine Protokollschicht des mehrschichtigen Kommunikationsprotokolls geeignet ist und der Datenträger (3) zumindest eine der zumindest zwei separaten Adressen erzeugt.

5. Verfahren nach einem der Ansprüche 1 bis 4, **dadurch gekennzeichnet, dass** zur Adressierung des Datenträgers (3) durch die Schreibvorrichtung (2) über eine TCP/IP-Verbindung eine individuelle Adressierung erzeugt wird (S12, S13), die zumindest eine bezüglich der Schreibvorrichtung (2) eindeutige, datenträgerindividuelle IP-Adresse des zumindest einen Datenträgers (3) umfasst.

6. Verfahren nach Anspruch 5, **dadurch gekennzeichnet, dass** die IP-Adresse von dem Datenträger (3) oder von der Schreibvorrichtung (2) erzeugt wird (S12, S13), mit der der Datenträger (3) verbunden ist.

7. Verfahren nach Anspruche 5 oder 6, **dadurch gekennzeichnet, dass** zwischen der Schreibvorrichtung (2) und dem Datenträger (3) eine TCP/ IP-Verbindung aufgebaut wird (S15) und die Daten (6) von der Schreibvorrichtung (2) mittels der erzeugten individuellen Adressierung gemäß dem TCP/IP-Protokoll in den Datenträger (3) eingeschrieben werden (S17).

8. Verfahren nach einem der Ansprüche 1 bis 7, **dadurch gekennzeichnet, dass** der Datenträger (3) mit der Schreibvorrichtung (2) über eine USB-Verbindung (12) verbunden wird und die Daten (6) von der Schreibvorrichtung (2) über die USB-Verbindung (12) in einen Speicher (13) des zumindest einen Datenträgers (3) eingeschrieben werden (S17; S24a; S26b; S26c).

9. Verfahren nach Anspruch 8, **dadurch gekennzeichnet, dass** der zumindest eine portable Datenträger (3) als Massenspeicher in ein Dateisystem der Schreibvorrichtung (2) eingebunden wird und die Daten (6) über eine Dateisystemoperation der Schreibvorrichtung (2) in den Datenträger (3) eingeschrieben werden (S24a; S26b; S26c).

10. Verfahren nach Anspruch 9, **dadurch gekennzeichnet, dass** der Datenträger (3) zum Einschreiben der Daten (6) durch eine Dateisystemoperation der Schreibvorrichtung (2) als einen von dem Datenträger (3) zu erzeugenden zumindest einen Teil der individuellen Adressierung eine bezüglich der Schreibvorrichtung (2) eindeutige, datenträgerindividuelle Laufwerksbezeichnung des zumindest einen Datenträgers (3) erzeugt (S22a).

11. Verfahren nach einem der Ansprüche 3 bis 10, **dadurch gekennzeichnet, dass** die Schreibvorrichtung (2) eine Netzwerkverbindung zu dem portablen Datenträger (3) aufbaut (S15; S24b) und die Daten (6) über eine Netzwerkoperation der Schreibvorrichtung (2) in den Datenträger (3) eingeschrieben werden (S17; S26b; S26c).

12. Verfahren nach Anspruch 8, **dadurch gekennzeichnet, dass** der Datenträger (3) als einen von dem Datenträger (3) zu erzeugenden zumindest einen Teil der individuellen Adressierung eine bezüglich der Schreibvorrichtung (2) eindeutige, datenträgerindividuelle MAC-Adresse des zumindest einen Datenträgers (3) erzeugt (S12, S13) und über die USB-Verbindung (12) der Schreibvorrichtung (2) bereitstellt (S14b).

13. Verfahren nach einem der Ansprüche 1 bis 12, **dadurch gekennzeichnet, dass** die Schreibvorrichtung (2) im Rahmen einer Herstellung des Datenträgers (3) anfallende Betriebsdaten (6) in den Datenträger (3) einschreibt (S17; S24a; S26b; S26c).

14. Portabler Datenträger (3), umfassend zumindest einen Prozessor (15), einen Speicher (13), eine Schnittstelleneinrichtung (14) und einen Adressgenerator (16), der eingerichtet ist, zumindest einen Teil einer individuelle Adressierung zu erzeugen, über die der Datenträger (3) von einer über die Schnittstelleneinrichtung (14) mit dem Datenträger (3) verbundenen Schreibvorrichtung (2) beim Einschreiben von Daten (6) in den Speicher (13) eindeutig adressierbar ist, wobei der Adressgenerator (16) eingerichtet ist, zumindest einen Teil einer individuelle Adressierung zu erzeugen, die paarweise verschieden zu anderen individuellen Adressierungen ist, die jeweils für andere mit der Schreibvorrichtung (2) verbundene Datenträger (3) erzeugt werden, und der Adressgenerator (16) eingerichtet ist die individuelle Adresse basierend auf einer individuellen Kennung des Datenträgers (3) zu erzeugen.

15. Datenträger (3) nach Anspruch 14, **gekennzeichnet durch** eine Steuereinrichtung (17), die eingerichtet ist, ein Einschreiben der Daten (6) in den Speicher (13) **durch** eine Schreibvorrichtung (2) zu ermöglichen, wobei der Adressgenerator (16) und die Steuereinrichtung (17) desweiteren eingerichtet sind, ein Erzeugen zumindest eines Teils einer individuellen Adressierung und ein Einschreiben von Daten (6) in den Speicher (13) **durch** die Schreibvorrichtung (2) mittels der erzeugten individuellen Adressierung nach einem Verfahren gemäß den Ansprüchen 2 bis 13 zu ermöglichen.

16. Datenträger (3) nach einem der Ansprüche 14 oder 15, **dadurch gekennzeichnet, dass** der Datenträger (3) eine Chipkarte, Smart Card, Mobilfunkkarte oder sichere Multimediakarte ist.

## Claims

1. A method for writing (S 17; S24a; S26b; S26c) data (6) in a portable data carrier (3) connected to a writing device (2), wherein the data carrier (3) generates (S12, S 13; S22a) at least one part of an individual addressing, via which the data carrier (3) can be uniquely addressed by the writing device (2) upon the writing (S 17; S24a, S26b, S26c) of the data (6), and which is pairwise different from other individual addressings, which are generated in each case for other data carriers (3) connected to the writing device (2), and the individual address is generated (S12, S 13) on the basis of an individual identifier of the data carrier (3).

2. The method according to claim 1, **characterized in that** each of a multiplicity of data carriers (3) connected to the writing device (2) in each case generates (S12, S13; S22a) at least one part of the individual addressing, and the writing device (2) writes (S17; S24a ; S26b; S26c) the data (6) to the multiplicity of data carriers (3) by addressing each of the multiplicity of data carriers (3) via its respective individual addressing.

3. The method according to claim 2, **characterized in that** the writing device (2), writes (S17; S24a, S26b, S26c) the data (6) quasi-simultaneously to the multiplicity of data carriers (3).

4. The method according to any of the claims 1 to 3, **characterized in that** for uniquely addressing the data carrier (3) according to a multilayer communication protocol, an individual addressing is generated which comprises at least two separate addresses, wherein each of the at least two separate addresses is suitable for uniquely addressing the data carrier in each case via a protocol layer of the multilayer communication protocol, and the data carrier (3) generates at least one of the at least two separate addresses.

5. The method according to any of the claims 1 to 4, **characterized in that** for addressing the data carrier (3) by the writing device (2) via a TCP/IP connection an individual addressing is generated (S12, S 13) which comprises at least one data-carrier-individual IP address of the at least one data carrier (3) that is unique with reference to the writing device (2).

6. The method according to claim 5, **characterized in that** the IP address is generated (S12, S13) by the data carrier (3) or by the writing device (2) to which the data carrier (3) is connected.

7. The method according to claims 5 or 6, **characterized in that** between the writing device (2) and the data carrier (3), a TCP/IP connection is set up (S15) and the data (6) are written (S17) to the data carrier (3) by the writing device (2) by means of the generated individual addressing in accordance with the TCP/IP protocol.

8. The method according to any of the claims 1 to 7, **characterized in that** the data carrier (3) is connected to the writing device (2) via a USB connection (12), and the data (6) are written (S17; S24a; S26b; S26c) to a memory (13) of the at least one data carrier (3) by the writing device (2) via the USB connection (12).

9. The method according to claim 8, **characterized in that** the at least one portable data carrier (3) is incorporated as a mass storage in a file system of the writing device (2) and the data (6) are written (S24a; S26b; S26c) to the data carrier (3) through a file system operation of the writing device (2).

10. The method according to claim 9, **characterized in that,** for writing the data (6) through a file system operation of the writing device (2), the data carrier (3) generates (S22a), as the at least one part of the individual addressing to be generated by the data carrier (3), a data-carrier-individual disk drive designation of the at least one data carrier (3) that is unique with reference to the writing device (2).

11. The method according to any of the claims 3 to 10, **characterized in that** the writing device (2) sets up (S15; S24b) a network connection to the portable data carrier (3), and the data (6) are written (S17; S26b; S26c) to the data carrier (3) through a network operation of the writing device (2).

12. The method according to claim 8, **characterized in that** the data carrier (3) generates (S12, S 13), as the at least one part of the individual addressing to be generated by the data carrier (3), a data-carrier-individual MAC address of the at least one data carrier (3) that is unique with reference to the writing device (2), providing (S14b) the writing device (2) with said address via the USB connection (12).

13. The method according to any of the claims 1 to 12, **characterized in that** the writing device (2) writes (S 17; S24a, S26b, S26c) operation data (6) resulting within the framework of a manufacture of the data carrier (3) to the data carrier (3).

14. A portable data carrier (3), comprising at least one processor (15), a memory (13), an interface device (14) and an address generator (16) which is adapted to generate at least one part of an individual addressing, via which the data carrier (3) can be addressed uniquely upon writing data (6) to the memory (13) by a writing device (2) connected to the data carrier (3) via the interface device (14), wherein the address generator (16) is adapted to generate at least one part of an individual addressing which is pairwise different from other individual addressings generated in each case for other data carriers (3) connected to the writing device (2), and the address generator (16) is adapted to generate the individual address on the basis of an individual identifier of the data carrier (3).

15. The data carrier (3) according to claim 14, **characterized by** a control device (17) adapted to enable a writing of the data (6) to the memory (13) by a writing device (2), wherein the address generator (16) and the control device (17) are further adapted to enable a generation of at least one part of an individual addressing and a writing of data (6) to the memory (13) by the writing device (2) by means of the generated individual addressing by a method according to the claims 2 to 13.

16. The data carrier (3) according to any of the claims 14 or 15, **characterized in that** the data carrier (3) is a chip card, smart card, mobile communication card or secure multimedia card.

## Revendications

1. Procédé d'écriture (S 17; S24a; S26b; S26c) de données (6) dans un support de données (3) portable relié à un dispositif d'écriture (2), le support de données (3) générant (S12, S13; S22a) au moins une partie d'un adressage individuel par l'intermédiaire duquel le support de données (3) est univoquement adressable par le dispositif d'écriture (2) lors de l'écriture (S 17; S24a; S26b; S26c) des données (6), ledit adressage individuel étant différent par paires d'autres adressages individuels respectivement générés pour d'autres supports de données (3) reliés au dispositif d'écriture (2), et l'adresse individuelle étant générée (S12, S 13) sur la base d'un identifiant individuel du support de données (3).

2. Procédé selon la revendication 1, **caractérisé en ce que** chacun d'une pluralité de supports de données (3) reliés au dispositif d'écriture (2) génère (S12, S13; S22a) respectivement au moins une partie de l'adressage individuel, et **en ce que** le dispositif d'écriture (2) écrit (S 17; S24a; S26b; S26c), en adressant chacun de la pluralité de supports de données (3) par l'intermédiaire de son adressage individuel respectif, les données (6) dans la pluralité de supports de données (3).

3. Procédé selon la revendication 2, **caractérisé en ce que** le dispositif d'écriture (2) écrit (S17; S24a; S26b; S26c) quasiment simultanément les données (6) dans la pluralité de supports de données (3).

4. Procédé selon une des revendications de 1 à 3, **caractérisé en ce que,** pour adresser univoquement le support de données (3) selon un protocole de communication multicouche, un adressage individuel est généré, lequel comprend au moins deux adresses distinctes, chacune des au moins deux adresses distinctes étant appropriée à adresser univoquement le support de données par l'intermédiaire de respectivement une couche de protocole du protocole de communication multicouche, et le support de données (3) générant au moins une des au moins deux adresses distinctes.

5. Procédé selon une des revendications de 1 à 4, **caractérisé en ce que,** pour pour adresser le support de données (3) par le dispositif d'écriture (2), un adressage individuel est généré (S12, S13) par l'intermédiaire d'une liaison TCP/IP, laquelle comprend au moins une adresse IP du au moins un support de données (3) individuelle au support de données et univoque pour le dispositif d'écriture (2).

6. Procédé selon la revendication 5, **caractérisé en ce que** l'adresse IP est générée (S 12, S 13) par le support de données (3) ou par le dispositif d'écriture (2) avec lequel le support de données (3) est relié.

7. Procédé selon la revendication 5 ou 6, **caractérisé en ce que,** entre le dispositif d'écriture (2) et le support de données (3), une liaison TCP/IP est établie (S15), et les données (6) sont écrites (S 17) dans le support de données (3) selon le protocole TCP/IP par le dispositif d'écriture (2) au moyen de l'adressage individuel généré.

8. Procédé selon une des revendications de 1 à 7, **caractérisé en ce que** le support de données (3) est relié au dispositif d'écriture (2) par une liaison USB (12), et **en ce que** les données (6) sont écrites (S 17; S24a; S26b; S26c) par le dispositif d'écriture (2) par l'intermédiaire d'une liaison USB (12) dans la mémoire (13) du au moins un support de données (3).

9. Procédé selon la revendication 8, **caractérisé en ce que** le au moins un support de données (3) portable est intégré en tant que mémoire de masse dans un système de fichiers du dispositif d'écriture (2) et **en ce que** les données (6) sont écrites (S24a; S26b; S26c) dans le support de données (3) par l'intermédiaire d'une opération de système de fichiers du dispositif d'écriture (2).

10. Procédé selon la revendication 9, **caractérisé en ce que** le support de données (3), pour l'écriture des données (6) par une opération de système de fichiers du dispositif d'écriture (2), génère (S22a), en tant qu'une au moins une partie de l'adressage individuel devant être générée par le support de données (3), une désignation du lecteur du au moins un support de données (3) individuelle au support de données et univoque pour le dispositif d'écriture (2).

11. Procédé selon une des revendications de 3 à 10, **caractérisé en ce que** le dispositif d'écriture (2) établit (S 15; S24b) une liaison réseau avec le support de données (3) portable, et **en ce que** les données (6) sont écrites (S17; S26b; S26c) dans le support de données (3) par l'intermédiaire d'une opération réseau du dispositif d'écriture (2).

12. Procédé selon la revendication 8, **caractérisé en ce que** le support de données (3) génère (S 12, S 13), en tant qu'une au moins une partie de l'adressage individuel devant être générée par le support de données (3), une adresse MAC du au moins un support de données (3) individuelle au support de données et univoque pour le dispositif d'écriture (2), et la met à disposition (S 14b) par l'intermédiaire de la liaison USB (12) du dispositif d'écriture (2).

13. Procédé selon une des revendications de 1 à 12, **caractérisé en ce que** le dispositif d'écriture (2), dans le cadre d'une fabrication du support de données (3), écrit (S17; S24a; S26b; S26c) des données de fonctionnement (6) requises dans le support de données (3).

14. Support de données (3) portable, comprenant au moins un processeur (15), une mémoire (13), un équipement d'interface (14) et un générateur d'adresses (16), qui est conçu pour générer au moins une partie d'un adressage individuel par l'intermédiaire duquel le support de données (3) est, lors de l'écriture de données (6) dans la mémoire (13), univoquement adressable par un dispositif d'écriture (2) relié au support de données (3) par l'intermédiaire de l'équipement d'interface (14), le générateur d'adresses (16) étant conçu pour générer au moins une partie d'un adressage individuel différent par paires d'autres adressages individuels respectivement générés pour d'autres supports de données (3) reliés au dispositif d'écriture (2), et le générateur d'adresses (16) étant conçu pour générer l'adresse individuelle sur la base d'un identifiant individuel du support de données (3).

15. Support de données (3) selon la revendication 14, **caractérisé par** un équipement de commande (17) qui est conçu pour permettre une écriture des données (6) dans la mémoire (13) par un dispositif d'écriture (2), le générateur d'adresses (16) et l'équipement de commande (17) étant en outre conçus pour permettre suivant un procédé selon les revendications de 2 à 13 une génération d'au moins une partie d'un adressage individuel et une écriture de données (6) dans la mémoire (13) par le dispositif d'écriture (2) au moyen de l'adressage individuel généré.

16. Support de données (3) selon une des revendications 14 ou 15, **caractérisé en ce que** le support de données (3) est une carte à puce, une SmartCard, une carte de téléphonie mobile ou une carte multimédia sécurisée.
